# EUROPÄISCHE PATENTSCHRIFT

(11) **EP 2 992 586 B1**
(45) Veröffentlichungstag und Bekanntmachung des Hinweises auf die Patenterteilung: **20.08.2025**
(21) Anmeldenummer: 14719516.8
(22) Anmeldetag: 25.04.2014
(51) Int. Cl.: H02M 1/32, H02J 9/06

(54) **SCHALTUNGSANORDNUNG**
CIRCUIT ARRANGEMENT
CIRCUITERIE

(30) Priorität: 30.04.2013 DE 102013104380
(43) Veröffentlichungstag der Anmeldung: 09.03.2016
(73) Patentinhaber: Phoenix Contact GmbH & Co. KG, 32825 Blomberg (DE)
(72) Erfinder: ZEUCH, Jochen, 32825 Blomberg (DE); HENKEL, Hartmut, 32825 Blomberg (DE)
(74) Vertreter: Patentship Patentanwaltsgesellschaft mbH
(86) Internationale Anmeldenummer: PCT/EP2014/058443
(87) Internationale Veröffentlichungsnummer: WO 2014/177463

(56) Entgegenhaltungen:
- EP-A1- 0 847 124
- WO-A1-03/010877
- US-A- 3 882 412
- US-A- 5 399 956
- US-A1- 2002 126 836
- US-A1- 2003 006 650

## Beschreibung

Die Erfindung betrifft eine Schaltungsanordnung.

Schaltungsanordnungen, z.B. Stromregler, werden z.B. in einem Schaltschrank eingesetzt. In einem Schaltschrank werden industrielle Verbraucher vielfach mit einer Gleichspannung mit geringer Spannungshöhe versorgt. Das Gleichspannungsnetz wird z.B. aus einer oder mehreren Stromversorgungen aus der Netzspannung gespeist. Bei einem Gleichspannungsnetz ist die Versorgungsenergie gegenüber einem Wechselspannungsnetz wesentlich geringer begrenzt. So kann es z.B. bei modularen Anlagen oder durch den gleichzeitigen Betrieb zu einer Überlastung des Gleichspannungsnetzes mit Ausfall oder fehlerhaftem Betrieb der Anlage oder einzelner Komponenten kommen.

Eine Ursache für eine Überlast kann eine Begrenzung durch zu hohe Ladeenergie eines Energiespeichers sein.

Für ein Energiespeichermodul, wie z.B. eine unterbrechungsfrei Spannungsversorgung (USV) oder ein Kondensatormodul, wird elektrische Energie benötigt, um das Energiespeichermodul zu laden. Diese elektrische Energie wird durch eine vorgeschaltete Komponente, wie eine Spannungsversorgung oder auch eine Sicherung, begrenzt. Ebenso können weitere Komponenten schwankende zusätzliche elektrische Energiemengen benötigen. Der Energiespeicher kann dabei als Zwei- oder Vierpol ausgebildet sein. Um eine höhere Verfügbarkeit des elektrischen Energiespeichers zu erreichen, wird dieser möglichst schnell aufgeladen. Wird zum Laden des Energiespeichers zu viel elektrische Energie benötigt, kommt es zu einer Begrenzung der vorgeschalteten Energiequelle, also üblicherweise zu einem Spannungseinbruch. Um die vorgeschaltete Energiequelle nicht zu überlasten, wird die Eingangsspannung überwacht. Wenn die Eingangsspannung einen gewissen Wert unterschreitet wird der Ladevorgang abgebrochen.

Eine weitere Ursache für eine Überlast kann eine Begrenzung durch Zuschaltung einer kapazitiven Last oder Kurzschluss eines Gleichspannungswandlers (DC/DC-Wandler) sein.

Ein Gleichspannungswandler (DC/DC-Wandler) setzt die elektrische Eingangsenergie passend für einen oder mehrere Verbraucher um. Wird am Ausgang eine Last zugeschaltet, kann es insbesondere bei einer großen kapazitiven Last zu einer Begrenzung des Gleichspannungswandlers (DC/DC-Wandler) kommen. Um den Spannungseinbruch möglichst gering zu halten, wird z.B. die Strombegrenzung verzögert, oder der Wandler kann kurzzeitig bis zu einigen Sekunden eine deutlich höhere elektrische Ausgangsleistung abgeben. Durch eine kurzzeitige Spitzenstromaufnahme oder Überlast im Fehlerfall kann der Wandler eine hohe Energie aufnehmen. Dies kann einen unzulässig hohen Spannungseinbruch am Eingang des Wandlers bewirken. Ein vorgeschalteter Gleichrichter oder ein Netzteil (AC/DC-Wandler) oder ein Gleichspannungswandler (DC/DC-Wandler) kann in die Begrenzung geraten und die Ausgangsspannung verringern, wodurch andere parallel geschaltete Verbraucher gestört werden können.

Die an das Spannungsnetz angeschlossenen Verbraucher werden z.B. bei Wandlern durch eine Eingangsspannungsüberwachung (VLO) abgeschaltet. Andere Verbraucher arbeiten fehlerhaft weiter und geben gegebenenfalls falsche Signale aus. Bei einem Wiederanlauf wird gegebenenfalls unterstützt durch eine Soft-Starteinrichtung der Verbraucher wiederholt durchgeschaltet.

Aus der DE 10 2005 027 211 A1 ist eine Gleichstromversorgung bekannt. Die Gleichstromversorgung umfasst eine Regeleinheit, anhand derer die von einem Energiespeicher bereitgestellte Spannung im Wesentlichen auf die Höhe der vorgegebenen Ausgleichsspannung konvertierbar ist. Dabei lädt während eines Normalbetriebs eine Batterieladeschaltung den Energiespeicher auf. Eine Kontrolleinheit überwacht anhand eines Anschlusses die Eingangsspannung. Fällt diese unterhalb eines vorgegebenen Schwellwertes ab, steuert die Kontrolleinheit die Reglereinheit derart an, dass am Ausgang die vorgegebene Ausgleichsspannung konstant bleibt. Hierzu wird Energie aus dem Energiespeicher nutzbar gemacht. Es werden jedoch Phasen geringen Energiebedarfs nicht zum Laden des Energiespeichers genutzt.

Die Druckschrift WO 03/010877 A1 offenbart ein Steuerungssystem für einen Leistungswandler und Verfahren zur Betriebssteuerung eines solchen Leistungswandlers.

Die Druckschrift US 5 399 956 A offenbart ein Backup-Batteriesystem für ein tragbares elektronisches Gerät.

Die Druckschrift EP 0 847 124 A1 offenbart eine Notstromversorgungseinrichtung zur provisorischen Stromversorgung im Falle eines Versagens der Hauptstromversorgung.

Die Druckschrift US 2002/126836 A1 offenbart eine Schaltung zum Vergleich der relativen Leistungen von zwei Signalen und zum Bereitstellen einer Anzeige des größeren der beiden Signale.

Die Druckschrift US 2003/006650 offenbart in Figur 7 ein Regler-System 700 mit mehreren Schwellen. Das Regler-System 700 umfasst einen primären Spannungsregler 602, eine dynamische Last 128 und einen sekundären Spannungsregler 606.

Es ist daher die Aufgabe der vorliegenden Erfindung, eine Schaltungsanordnung bereitzustellen, die flexibler auf einen schwankenden Energiebedarf reagiert.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Die vorliegende Erfindung basiert auf der Erkenntnis, dass die Betriebssicherheit gesteigert werden kann, wenn die Eingangsspannung mit oberen und unteren Schwellwerten verglichen wird und entsprechend dem Vergleich die Ausgangsspannung erhöht oder reduziert wird.

Gemäß einem ersten Aspekt wird die Aufgabe gelöst durch eine Schaltungsanordnung gemäß Anspruch 1.

Dadurch wird der technische Vorteil erreicht, dass anhand eines Vergleiches des Wertes der Eingangsspannung mit einem oberen Schwellwert und einem unteren Schwellwert erfasst wird, dass die Ausgangsspannung einen kritischen Wert erreicht, woraufhin dann die Ausgangsspannung erhöht oder erniedrigt wird. So kann bei einem Überschreiten eines oberen Schwellwerts ein Energiespeicher mit elektrischer Energie geladen werden, so dass im Bedarfsfall ein mit elektrischer Energie aufgeladener Energiespeicher zur Verfügung steht. So wird die Betriebssicherheit gesteigert.

Erfindungsgemäß wird, wenn die Eingangsspannung (Uacc) größer als der erste obere Schwellwert (U1) ist, der Sollwert erhöht und die erste Erhöhungseinrichtung (112a) eingeschaltet, und damit die Ausgangsspannung um einen ersten Wert erhöht. Ferner wird erfindungsgemäß, wenn die Eingangsspannung (Uacc) größer als der zweite obere Schwellwert (U2) ist, der Sollwert erhöht und die zweite Erhöhungseinrichtung (112b) eingeschaltet, und damit die Ausgangsspannung um einen zweiten Wert erhöht._Dadurch wird der technische Vorteil erreicht, dass eine erhöhte Ausgangsspannung dann zur Verfügung gestellt wird, wenn eine besonders hohe Eingangsspannung zur Verfügung steht, mit der dann z.B. ein Energiespeicher aufgeladen werden kann.

In einer vorteilhaften Ausführungsform ist die Schaltungsanordnung ausgebildet, den Wert der elektrische Ausgangsspannung mit einem maximalen Ausgangsspannung-Grenzwert zu vergleichen, und wenn der Vergleich ergibt, dass der Wert der elektrische Ausgangsspannung größer als der maximale Ausgangsspannung-Grenzwert ist, den Wert für die Ausgangsspannung auf den maximalen Ausgangsspannung-Grenzwert zu setzen oder die Schaltungsanordnung abzuschalten. Dadurch wird der technische Vorteil erreicht, dass die Ausgangsspannung durch das Erhöhen des oberen Schwellwertes nicht Werte annehmen kann, die oberhalb einer maximalen möglichen Ausgangsspannung liegen. Dadurch wird die Betriebssicherheit gesteigert.

Erfindungsgemäß wird, wenn die Eingangsspannung (Uacc) kleiner als der erste untere Schwellwert (U3) ist, der Sollwert reduziert und die erste Reduziereinrichtung (114a) eingeschaltet, und damit die Ausgangsspannung um einen dritten Wert reduziert. Ferner wird erfindungsgemäß, wenn die Eingangsspannung (Uacc) kleiner als der zweite untere Schwellwert (U4) ist, der Sollwert reduziert und die zweite Reduziereinrichtung (114b) eingeschaltet, und damit die Ausgangsspannung um einen vierten Wert reduziert. Dadurch wird der technische Vorteil erreicht, dass die Ausgangsspannung dann reduziert wird, wenn eine besonders kleine Eingangsspannung zur Verfügung steht. Dann kann der Energiespeicher entladen werden.

Erfindungsgemäß weist die Schaltungsanordnung eine Mehrzahl von Erhöhungseinrichtungen auf, wobei jeder der Erhöhungseinrichtungen jeweils ein oberer Schwellwert zugeordnet ist. Dadurch wird der technische Vorteil erreicht, dass die einzelnen Erhöhungseinrichtungen abgestaffelt nach der Höhe der Eingangsspannung eingeschaltet werden und so die Ausgangsspannung erhöhen. So kann die Ausgangsspannung besonders fein abgestuft angepasst werden.

Erfindungsgemäß weist die die Schaltungsanordnung eine Mehrzahl von Reduziereinrichtungen auf, wobei jeder der Reduziereinrichtungen jeweils ein unterer Schwellwert zugeordnet ist. Dadurch wird der technische Vorteil erreicht, dass die einzelnen Reduziereinrichtungen abgestaffelt nach der Höhe der Eingangsspannung eingeschaltet werden und so die Ausgangsspannung reduzieren. So kann die Ausgangsspannung besonders fein abgestuft angepasst werden.

In einer vorteilhaften Ausführungsform ist die Schaltungsanordnung ausgebildet, den Wert der elektrische Ausgangsspannung mit einem minimalen Ausgangsspannungs-Grenzwert zu vergleichen, und wenn der Vergleich ergibt, dass der Wert der elektrischen Ausgangsspannung kleiner als der minimale Ausgangsspannungs-Grenzwert ist, den Wert für die Ausgangsspannung auf den minimalen Ausgangsspannungs-Grenzwert zu setzen, oder die Schaltungsanordnung abzuschalten. Dadurch wird der technische Vorteil erreicht, dass eine minimale Spannungshöhe zum sichern Betrieb gewährleistet wird oder bei einem Unterschreiten einer Mindestversorgungs- bzw. Ausgangsspannung Fehlfunktionen durch Abschaltung zuvorgekommen wird.

In einer vorteilhaften Ausführungsform weist die Schaltungsanordnung einen Spannungsteiler zum Bereitstellen eines oberen Schwellwerts und/oder eines unteren Schwellwerts auf. Dadurch wird der technische Vorteil erreicht, dass mit Hilfe des Spannungsteilers auf einfache Art und Weise eine Vielzahl von oberen oder unteren Schwellwerten bereitgestellt werden können, um einen feinstufige Anpassung vornehmen zu können.

In einer weiteren vorteilhaften Ausführungsform weist die Vergleichseinrichtung einen Komparator auf. Dadurch wird der technische Vorteil erreicht, dass die Schaltungsanordnung mit zuverlässigen, leicht verfügbaren und zugleich preiswerten Bauelementen aufgebaut werden kann.

Gemäß einem zweiten Aspekt wird die Aufgabe gelöst durch ein Verfahren gemäß Anspruch 8.

Dadurch wird der technische Vorteil erreicht, dass anhand eines Vergleiches der Eingangsspannung mit einem oberen und einem unteren Schwellwert erfasst wird, dass die Ausgangsspannung einen kritischen Wert erreicht, woraufhin dann die Ausgangsspannung durch Erhöhen oder Reduzieren des Korrekturfaktors erhöht oder reduziert wird. So kann bei einem Überschreiten eines oberen Schwellwerts ein Energiespeicher mit elektrischer Energie geladen werden, so dass im Bedarfsfall ein mit elektrischer Energie aufgeladener Energiespeicher zur Verfügung steht. So wird die Betriebssicherheit gesteigert. Es werden also Spannungsreserven genutzt, wenn die Eingangsspannung über dem Grenzwert liegt, um einen Energiespeicher zu laden, der entladen wird, wenn die Eingangsspannung unterhalb eines Grenzwertes liegt.

Erfindungsgemäß erfolgt ein Vergleichen eines Wertes einer elektrischen Eingangsspannung (Uacc) mit einem ersten oberen Schwellwert (U1) und ein Erhöhen eines Wertes des Korrekturfaktors (K) um einen ersten oberen Korrekturwert (K1), wenn der Vergleich ergibt, dass der Wert der Eingangsspannung (Uacc) größer als der erste obere Schwellwert (U1). Ferner erfolgt erfindungsgemäß ein Vergleichen eines Wertes einer elektrischen Eingangsspannung (Uacc) mit einem zweiten oberen Schwellwert (U2) und ein Erhöhen eines Wertes des Korrekturfaktors (K) um einen zweiten oberen Korrekturwert (K2), wenn der Vergleich ergibt, dass der Wert der Eingangsspannung (Uacc) größer als der zweite obere Schwellwert (U2) ist. Dadurch wird der technische Vorteil erreicht, dass der Korrekturfaktor und damit die elektrische Ausgangsspannung angehoben werden und mit einem erhöhten Korrekturfaktor das Verfahren fortgesetzt wird. Bei dem ersten Korrekturwert kann es sich um einen fixen, vorgegebenen Korrekturwert handeln. Ferner kann eine Mehrzahl von oberen Schwellwerten vorgesehen sein, wobei jedem der Schwellwerte ein anderer Korrekturwert, z.B. fixer Korrekturwert, zugeordnet ist. Somit ist eine abgestaffelte Erhöhung des Korrekturfaktors möglich, was eine besonders feinstufige Stromregelung ermöglicht.

In einer weiteren vorteilhaften Ausführungsform wird der Wert des Korrekturfaktors mit einem oberen Grenzwert verglichen, und der Korrekturfaktorwird auf den Wert des oberen Grenzwertes gesetzt, wenn der Wert des Korrekturfaktors größer als der obere Grenzwert ist. Dadurch wird der technische Vorteil erreicht, dass der Wert des Korrekturfaktors nicht unzulässig hohe Werte annehmen kann. Dadurch ist die Betriebssicherheit gesteigert.

In einer weiteren vorteilhaften Ausführungsform wird der Wert des Korrekturfaktors mit einem oberen Korrekturfaktorgrenzwert verglichen, und wenn der Vergleich ergibt, dass der Wert des Korrekturfaktors größer als der obere Korrekturfaktorgrenzwert ist, wird der Wert für den Korrekturfaktor auf den oberen Korrekturfaktorgrenzwert gesetzt. Dadurch wird der technische Vorteil erreicht, dass der Wert des Korrekturfaktors und damit die Ausgangsspannung durch das Erhöhen des oberen Schwellwertes nicht Werte annehmen können, die oberhalb einer maximalen möglichen Ausgangsspannung liegen. Dadurch wird die Betriebssicherheit gesteigert.

Erfindungsgemäß erfolgt ein Vergleichen eines Wertes einer elektrischen Eingangsspannung (Uacc) mit einem ersten unteren Schwellwert (U3) und ein Erniedrigen eines Wertes des Korrekturfaktors (K) um einen ersten unteren Korrekturwert (K3), wenn der Vergleich ergibt, dass der Wert der Eingangsspannung (Uacc) kleiner als der erste untere Schwellwert (U3) ist. Ferner erfolgt erfindungsgemäß ein Vergleichen eines Wertes einer elektrischen Eingangsspannung (Uacc) mit einem zweiten unteren Schwellwert (U4) und ein Erniedrigen eines Wertes des Korrekturfaktors (K) um einen zweiten unteren Korrekturwert (K4), wenn der Vergleich ergibt, dass der Wert der Eingangsspannung (Uacc) kleiner als der zweite untere Schwellwert (U4) ist. Dadurch wird der technische Vorteil erreicht, dass der Korrekturfaktor und damit die elektrische Ausgangsspannung reduziert und mit einem reduzierten Korrekturfaktor das Verfahren fortgesetzt wird. Bei dem unteren Korrekturwert kann es sich um einen fixen, vorgegebenen Korrekturwert handeln. Ferner kann eine Mehrzahl von unteren Schwellwerten vorgesehen sein, wobei jedem der Schwellwerte ein anderer Korrekturwert, z.B. fixer Korrekturwert, zugeordnet ist. Somit ist eine abgestaffelte Erhöhung des Korrekturfaktors möglich, was eine besonders feinstufige Stromregelung ermöglicht.

In einer weiteren vorteilhaften Ausführungsform wird der Wert des Korrekturfaktors mit einem unteren Grenzwert verglichen, und der Korrekturfaktor wird auf den Wert des unteren Grenzwertes gesetzt, wenn der der Wert des Korrekturfaktors kleiner als der untere Grenzwert ist. Dadurch wird der technische Vorteil erreicht, dass der Wert des Korrekturfaktors nicht unzulässig kleine Werte annehmen kann. Dadurch ist die Betriebssicherheit gesteigert.

In einer weiteren vorteilhaften Ausführungsform wird der Wert des Korrekturfaktors mit einem unteren Korrekturfaktorgrenzwert verglichen, und wenn der Vergleich ergibt, dass der Wert des Korrekturfaktors kleiner als der untere Korrekturfaktorgrenzwert ist, wird der Wert für den Korrekturfaktor auf den unteren Korrekturfaktorgrenzwert gesetzt. Dadurch wird der technische Vorteil erreicht, dass der Wert des Korrekturfaktors und damit die Ausgangsspannung durch das Reduzieren des unteren Schwellwertes nicht Werte annehmen kann, die unterhalb einer minimalen Ausgangsspannung liegt, die einen sicheren Betrieb gewährleistet. Dadurch wird die Betriebssicherheit gesteigert.

In einer weiteren vorteilhaften Ausführungsform wird der Wert des Korrekturfaktors mit einem Abschaltgrenzwert verglichen, und wenn der Vergleich ergibt, dass der Wert des Korrekturfaktors kleiner als der Abschaltgrenzwert ist, wird ein Abschaltvorgang ausgelöst. Dadurch wird der technische Vorteil erreicht, dass bei einem Unterschreiten einer Mindestversorgungs- bzw. Ausgangsspannung Fehlfunktion durch Abschaltung zuvorgekommen wird. Das Auslösen des Abschaltvorgangs kann das Erzeugen und Versenden eines Abschaltsignals umfassen, mit dem ein Abschalten eines Stromreglers oder eine Schaltungsanordnung bewirkbar ist.

Gemäß einem dritten Aspekt wird die Aufgabe gelöst durch ein Computerprogramm mit einem Programmcode zum Ausführen eines derartigen Verfahrens, wenn der Programmcode auf einem Computer ausgeführt wird.

Weitere Ausführungsbeispiele werden Bezug nehmend auf die beiliegenden Zeichnungen erläutert. Es zeigen:
- Fig. 1: eine schematische Darstellung einer Schaltungsanordnung,
- Fig. 2: eine aufgelöste Teilschaltungsanordnung der in Fig. 1 gezeigten Schaltungsanordnung, und
- Fig. 3: ein Ablaufdiagramm eines Verfahrens.

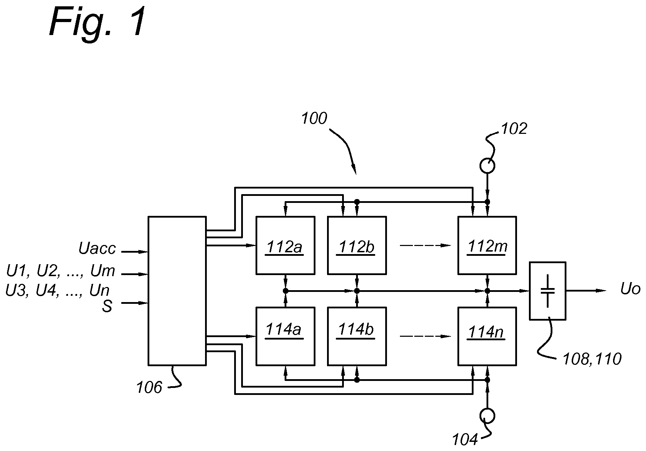

Die Fig. 1 zeigt eine Schaltungsanordnung 100.

Die Schaltungsanordnung 100 weist einen ersten Anschluss 102 zum Anschluss einer positiven elektrischen Versorgungsspannung und einen zweiten Anschluss 104 zum Anschluss einer negativen elektrischen Versorgungsspannung auf. Ferner weist die Schaltungsanordnung 100 einen Energiespeicher 108 auf, der einen Kondensator 110 aufweist. Des Weiteren weist die Schaltungsanordnung 100 eine Vergleichseinrichtung 106, eine Mehrzahl von Erhöhungseinrichtungen 112a, 112b, ..., 112m sowie eine Mehrzahl von Reduziereinrichtungen 114a, 114b, ..., 114n auf.

Mit der Vergleichseinrichtung 106 sind über elektrische Leitungen die Erhöhungseinrichtungen 112a, 112b, ..., 112n und die Reduziereinrichtungen 114a, 114b, ..., 114m elektrisch leitend verbunden.

Ferner sind die Erhöhungseinrichtungen 112a, 112b, ..., 112n über elektrische Leitungen mit dem ersten Anschluss 102 elektrisch leitend verbunden, während die Reduziereinrichtungen 114a, 114b, ..., 114m über elektrische Leitungen mit dem zweiten Anschluss 104 elektrisch leitend verbunden sind. Des Weiteren sind die Erhöhungseinrichtungen 112a, 112b, ..., 112n und die Reduziereinrichtungen 114a, 114b, ..., 114m über elektrische Leitungen elektrisch leitend mit dem Energiespeicher 108 verbunden, der eine Ausgangsspannung Uo ausgibt.

Der Vergleichseinrichtung 106 wird eine Eingangsspannung Uacc zugeführt. Ferner werden der Vergleichseinrichtung 106 ein erster oberer Schwellwert U1, ein zweiter obere Schwellwert U2, sowie m weitere obere Schwellwerte Um zugeführt. Des Weiteren werden der Vergleichseinrichtung 106 ein erster unterer Schwellwert U3, ein zweiter unterer Schwellwert U4 sowie n weitere untere Schwellwerte Un zugeführt. Dabei entspricht dann die Anzahl der oberen Schwellwerte der Anzahl der Erhöhungseinrichtungen 112a, 112b, ..., 112n, und die Anzahl der unteren Schwellwerte entspricht der Anzahl der Reduziereinrichtungen 114a, 114b, ..., 114m.

Auf Empfang eines Startsignals S wird die Schaltungsanordnung 100 aktiviert. Im Betrieb wird die Eingangsspannung Uacc mit dem ersten oberen Schwellwert U1, mit dem zweiten oberen Schwellwert U2, mit dem ersten unteren Schwellwert U3 und dem zweiten unteren Schwellwert U4 verglichen. Ergibt der durch die Vergleichseinrichtung 106 durchgeführte Vergleich, dass die Eingangsspannung Uacc größer als der erste obere Schwellwert U1 ist, wird die Erhöhungseinrichtung 112a eingeschaltet, und damit die elektrische Spannung am Energiespeicher 108 um einen ersten Wert erhöht.

Ergibt der durch die Vergleichseinrichtung 106 durchgeführte Vergleich, dass die Eingangsspannung Uacc oberhalb des zweiten oberen Schwellwertes U2 liegt, wird die Erhöhungseinrichtung 112b eingeschaltet, und damit die elektrisch Spannung am Energiespeicher 108 um einen zweiten Wert erhöht. Ferner wird ein Sollwert der Strombegrenzung eines Stromreglers erhöht. Dies setzt sich fort, bis der jeweilige m-te obere Schwellwert Um überschritten wurde, worauf dann die jeweilige m-te Erhöhungseinrichtung 112m eingeschaltet und damit die Spannung am Energiespeicher 108 erhöht wird.

Ergibt der durch die Vergleichseinrichtung 106 durchgeführte Vergleich hingegen, dass die Eingangsspannung Uacc den ersten unteren Schwellwert U3 unterschreitet, wird die Reduziereinrichtung 104a eingeschaltet, und damit die elektrische Spannung am Energiespeicher 108 um einen dritter Wert reduziert, so dass der Energiespeicher 108 wieder entladen wird. Ferner wird der Sollwert der Strombegrenzung eines Stromreglers reduziert.

Ergibt der durch die Vergleichseinrichtung 106 durchgeführte Vergleich, dass die Eingangsspannung Uacc den zweiten unteren Schwellwert U4 unterschreitet, wird die Reduziereinrichtung 114b eingeschaltet, und damit die elektrische Spannung am Energiespeicher 108 um einen vierten Wert reduziert, so dass der Energiespeicher 108 weiter entladen wird. Ferner wird der Sollwert der Strombegrenzung des Stromreglers erniedrigt. Dies setzt sich fort, bis der jeweilige n-te untere Schwellwert Un unterschritten wurde, worauf dann die jeweilige n-te Reduziereinrichtung 114n eingeschaltet und damit die Spannung am Energiespeicher 108 reduziert wird.

Steigt die Eingangsspannung Uacc wieder über den zweiten unteren Schwellwert U4 und den ersten unteren Schwellwert U3, werden die Reduziereinrichtungen 114a und 114b wieder abgeschaltet. Wenn die Eingangsspannung Uacc weiter steigt, und zwar oberhalb des zweiten oberen Schwellwertes U2 und oberhalb des ersten oberen Schwellwertes U1, werden die Erhöhungseinrichtungen 112a, 112b wieder eingeschaltet. Ferner wird der Sollwert der Strombegrenzung des Stromreglers weiter erhöht. Es wird also im Betrieb fortlaufend der Stromgrenzwert auf einen Maximalwert geregelt. Somit bleibt der Wert der Eingangsspannung Uacc innerhalb eines vorgegebenen Werteintervalls, das einen sicheren Betrieb gewährleistet.

Im Betrieb passt sich die Strombegrenzung dynamisch fortlaufend an die jeweiligen Lastbedingungen an. Bei hohen Lasten mit geringer Reserve wird die Last z.B. durch Absenken der elektrischen Energie zum Laden des Energiespeichers 108 verringert, bei geringerer Last wird die elektrische Energie wieder erhöht. Bei einer kurzzeitigen Spitzenstromaufnahme wird der Stromgrenzwert mit sinkender Eingangsspannung Uacc abgesenkt und bei Anstieg der Eingangsspannung Uacc wird der Stromgrenzwert wieder erhöht.

Dem ersten oberen Schwellwert U1 kann eine erste Zeitkonstante zugeordnet sein, und dem zweiten oberen Schwellwert U2 kann eine zweite Zeitkonstante zugeordnet sein. Die erste Zeitkonstante ist größer als die zweite Zeitkonstante, so dass bei Überschreiten des zweiten oberen Schwellwertes U2 der Sollwert der Strombegrenzung schneller geändert wird als bei Überschreiten des ersten unteren Schwellwertes U1.

Ferner kann dem ersten unteren Schwellwert U3 eine dritte Zeitkonstante zugeordnet sein, und dem zweiten unteren Schwellwert U4 kann eine vierte Zeitkonstante zugeordnet sein. Die dritte Zeitkonstante ist größer als die vierte Zeitkonstante, so dass bei Überschreiten des zweiten unteren Schwellwertes U4 der Sollwert der Strombegrenzung schneller geändert wird als bei Überschreiten des ersten unteren Schwellwertes U3.

Eine Differenz aus dem Wert der Eingangsspannung Uacc und z.B. dem ersten oberen Schwellwert U1 oder dem ersten unteren Schwellwert U3 wird gebildet. Anhand der Differenz wird dann ein Wert für eine Zeitkonstante bestimmt, mit der der Energiespeicher 108 geladen oder entladen wird. Bei einer großen Differenz wird ein hoher Wert, z.B. ein überproportional hoher Wert, für die Zeitkonstante bestimmt, während bei einer kleinen Differenz ein kleiner Wert, z.B. ein unterproportional niedriger Wert, für die Zeitkonstante bestimmt wird. So wird bei einer großen Differenz der Energiespeicher 108 schnell geladen oder entladen, während bei einer kleinen Differenz der Energiespeicher 108 langsam geladen und entladen wird.

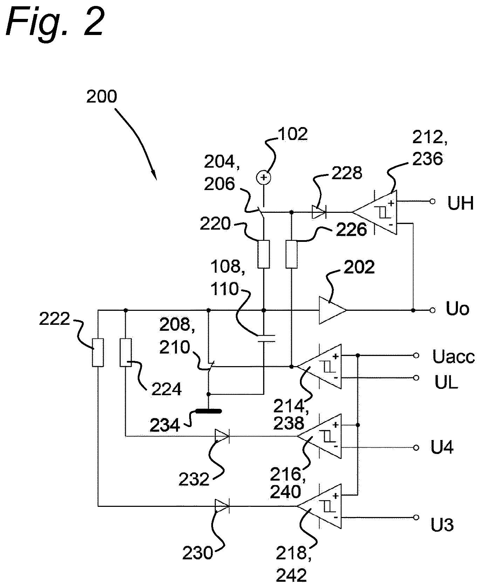

Fig. 2 zeigt eine aufgelöste Teilschaltungsanordnung 200 der Schaltungsanordnung 100.

Die Teilschaltungsanordnung 200 weist den ersten Anschluss 102 für eine Versorgungsspannung auf. Ferner weist die Teilschaltungsanordnung 200 den Energiespeicher 108 auf, der den Kondensator 110 aufweist.

Des Weiteren weist die Teilschaltungsanordnung 200 einen Verstärker 202 zum Verstärken der elektrischen Spannung des Kondensators 110 auf, der die Ausgangsspannung Uo bereitstellt. Weitere Komponenten der Schaltungsanordnung sind ein erster Schalter 204, der als Schließer 206 ausgebildet ist, und ein zweiter Schalter 208, der als Öffner 210 ausgebildet ist. Ferner umfasst die Teilschaltungsanordnung 200 vier Vergleichseinrichtungen 212 - 218, die je einen Komparator 236 - 242 aufweisen. Alternativ können die Vergleichseinrichtungen 212 - 218 Schmitt-Trigger aufweisen. Außerdem umfasst die Teilschaltungsanordnung 200 drei Dioden 228 - 232, einen Masseanschluss 234, sowie vier ohmsche Widerstände 220 - 226.

Die Vergleichseinrichtung 212 wird die Ausgangsspannung Uo und ein maximaler Ausgangsspannungsgrenzwert UH zugeführt, wobei der maximale Ausgangsspannungsgrenzwert UH einen maximalen elektrischen Ausgangsstrom repräsentiert. Ausgangsseitig ist die Vergleichseinrichtung 212 über die Diode 228 mit dem als Schließer 206 ausgebildeten ersten Schalter 204 elektrisch leitend verbunden, so dass bei einem Überschreiten des Schwellwerts UH die Schaltungsanordnung 100 durch Öffnen des ersten Schalters 204 abgeschaltet werden kann.

Der Vergleichseinrichtung 214 werden die Eingangsspannung Uacc und ein minimaler Ausgangsspannungs-Grenzwert UL für die Abschaltung z.B. bei zu geringer Eingangsspannung Uacc oder für eine Eingangsspannung Uacc von 0 Volt zugeführt. Die Vergleichseinrichtung 214 ist ausgangsseitig mit dem als Öffner 210 ausgebildeten zweiten Schalter 208 elektrisch leitend verbunden und bewirkt so, dass, wenn die Eingangsspannung Uacc unter den minimalen Ausgangsspannungs-Grenzwert UL fällt, dass der Öffner 210 geöffnet wird und damit die Schaltungsanordnung 100 abgeschaltet wird.

Der erste untere Schwellwert U3 wird der Vergleichseinrichtung 218 zugeführt, wobei dem Komparator 218 ebenfalls die Eingangsspannung Uacc zugeführt wird. Ausgangsseitig ist die Vergleichseinrichtung 216 über die Diode 230 und dem ohmschen Widerstand 222 mit dem Verstärker 202 und dem Kondensator 110 verbunden, der wiederum mit einem Masseanschluss 234 verbunden ist.

Der zweite untere Schwellwert **U4** wird der Vergleichseinrichtung 216 zugeführt, der ebenfalls die Eingangsspannung Uacc zugeführt wird. Ausgangsseitig ist die Vergleichseinrichtung 216 über die Diode 232 und dem ohmschen Widerstand 224 mit dem Verstärker 202 und dem Kondensator 110 elektrisch leitend verbunden.

Zwischen dem Kondensator 110 und dem ersten Schalter 204 ist der ohmsche Widerstand 220 angeordnet, und zwischen dem Ausgang der Vergleichseinrichtung 214 und dem Ausgang der Vergleichseinrichtung 212 sind der ohmsche Widerstand 226 und die Diode 228 in Reihe angeordnet.

Nach dem Einschalten ist der Kondensator 110 entladen und erzeugt über dem Verstärker 202 eine Ausgangsspannung Uo von 0 Volt. Die Eingangsspannung Uacc hat einen höheren Wert als der erste unter Schwellwert U3, der zweite untere Schwellwert U4 und der minimale Ausgangsspannungs-Grenzwert UL. Ferner ist der maximale Ausgangsspannungsgrenzwert UH größer als die Eingangsspannung Uacc.

Auf ein Startsignal S hin wird der erste Schalter 204 geschlossen und der zweite Schalter 208 geöffnet. Nun wird der Kondensator 110 über den Widerstand 220 mit elektrischer Energie aufgeladen.

Erreicht die Höhe der Ausgangsspannung Uo den Schwellwert UH, wird die elektrische Spannung am Kondensator 110 gehalten.

Sinkt jedoch die Eingangsspannung Uacc unter den ersten unteren Schwellwert U3, wird die elektrische Spannung an dem Kondensator 110 über dem ohmschen Widerstand 222 so lange reduziert, bis die Eingangsspannung Uacc den ersten unteren Schwellwert U3 wieder übersteigt und der Kondensator 110 wieder über den ohmschen Widerstand 220 geladen wird. Dabei bilden der ohmsche Widerstand 222 und der Kondensator 110 z.B. die dritte Zeitkonstante, mit der der Sollwert der Strombegrenzung verändert wird.

Sinkt hingegen die Eingangsspannung Uacc unter den zweiten unteren Schwellwert U4, wird die elektrische Spannung an dem Kondensator 110 über den ohmschen Widerstand 224 so lange reduziert, bis die aktuelle Eingangsspannung Uacc den zweiten unteren Schwellwert U4 wieder überschreitet. Dabei bilden der ohmsche Widerstand 224 und der Kondensator 110 z.B. die vierte Zeitkonstante, mit der der Sollwert der Strombegrenzung verändert wird.

Unterschreitet hingegen die Eingangsspannung Uacc den minimalen Ausgangsspannungs-Grenzwert UL, wird der Kondensator 110 vollständig entladen.

Die in Fig. 2 gezeigte Teilschaltungsanordnung 200 kann um weitere Eingänge für einen ersten oberen Grenzwert U1 und einen zweiten oberen Grenzwert U2 erweitert werden, die mit weiteren Vergleichseinrichtungen verbunden sind, wobei auf Überschreiten des ersten oberen Schwellwerts U1 die Ausgangsspannung Uo durch Aufladen des Kondensators 110 erhöht wird. Wenn die Eingangsspannung Uacc den zweiten oberen Schwellwert U2 überschreitet, wird der Kondensator 110 ebenfalls aufgeladen und damit die Ausgangsspannung Uo erhöht.

Anstelle der in Fig. 1 gezeigten Schaltungsanordnung 100 kann die Funktion der Schaltungsanordnung 100 durch ein Computerprogramm realisiert sein, das nur aus Softwarekomponenten oder aus einer Kombination von Soft- und Hardwarekomponenten gebildet ist.

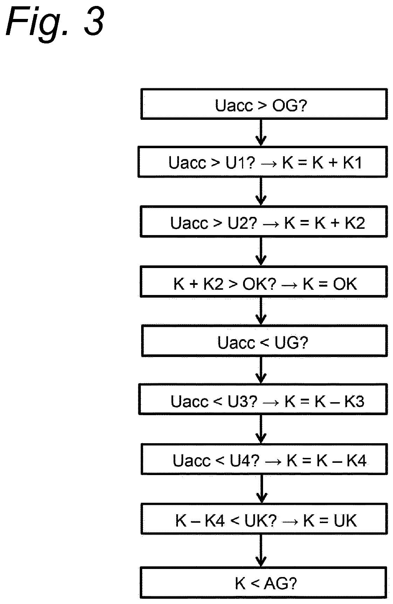

Die Fig. 3 zeigt ein Ablaufdiagramm eines Verfahrens. Bei dem Verfahren wird ein Korrekturfaktor K zur Berechnung des Stromgrenzwertes bestimmt und fortlaufend aktualisiert. Zur Durchführung des Verfahrens wird das Computerprogramm mit einem Programmcode auf einem Computer ausgeführt.

In einem ersten Schritt wird überprüft, ob der Wert des Korrekturfaktors K oberhalb eines vorgegebenen oberen Grenzwertes OB liegt. Wenn der Wert des Korrekturfaktors K oberhalb des oberen Grenzwertes OG liegt, kann der Korrekturfaktor K aufgrund physikalischer Grenzen, wie z.B. einer maximalen Versorgungsspannung, nicht weiter erhöht werden. In diesem Fall wird der Wert für den Korrekturfaktor K auf den Wert des oberen Grenzwerts OG gesetzt.

Wenn hingegen der Wert des Korrekturfaktors K unterhalb des oberen Grenzwerts OG liegt, wird in einem nächsten Schritt geprüft, ob die elektrische Eingangsspannung Uacc oberhalb des ersten oberen Schwellwertes U1 liegt. Wenn der Wert der Eingangsspannung Uacc oberhalb des ersten oberen Schwellwertes U1 liegt, wird der Wert des Korrekturfaktors K um einen ersten oberen Korrekturwert K1 erhöht.

Bei dem ersten oberen Korrekturwert K1 kann es sich um einen fixen, vorgegebenen Wert handeln, oder der erste Korrekturwert K1 wird aus dem Wert der Eingangsspannung Uacc und dem Wert des oberen Schwellwertes U1 bestimmt. Zum Beispiel kann hierzu die Differenz aus der Eingangsspannung Uacc und dem ersten oberen Schwellwertes U1 gebildet werden, um bei einer großen Differenz einen überproportional großen Korrekturwert K zu bilden und bei einer kleinen Differenz einen unterproportional großen Korrekturwert K zu bilden. Eine große Differenz liegt vor, wenn der Wert der Differenz zwischen der Eingangsspannung Uacc und dem ersten oberen Schwellwert U1 oberhalb eines Grenzwerts liegt. Eine kleine Differenz liegt vor, wenn der Wert der Differenz zwischen der Eingangsspannung Uacc und dem ersten oberen Schwellwert U1 unterhalb des Grenzwerts liegt.

In einem weiteren Schritt wird überprüft, ob die Eingangsspannung Uacc den zweiten oberen Schwellwert U2 überschreitet. Wenn der Wert die Eingangsspannung Uacc den zweiten oberen Schwellwert U2 überschreitet, wird der Korrekturfaktor K um einen zweiten oberen Korrekturwert K2 erhöht.

Bei dem zweiten oberen Korrekturwert K2 kann es sich um einen fixen, vorgegebenen Wert handeln, oder der zweite Korrekturwert K2 wird wie der erste Korrekturwert K1 bestimmt. Zum Beispiel kann hierzu die Differenz aus der Eingangsspannung Uacc und dem Wert des zweite oberen Schwellwertes U2 gebildet werden, um bei einer großen Differenz einen überproportional großen Korrekturwert K zu bilden und bei einer kleinen Differenz einen unterproportional großen Korrekturwert K zu bilden. Eine große Differenz liegt vor, wenn der Wert der Differenz zwischen der Eingangsspannung Uacc und dem zweiten oberen Schwellwert U2 oberhalb eines Grenzwerts liegt. Eine kleine Differenz liegt vor, wenn der Wert der Differenz zwischen der Eingangsspannung Uacc und dem zweiten oberen Schwellwert U2 unterhalb des Grenzwerts liegt.

In einem weiteren Schritt wird überprüft, ob der nun erhaltene Korrekturfaktor K aufgrund der Erhöhung um den ersten oberen Korrekturwert K1 und/oder zweiten oberen Korrekturwert K2 einen Wert aufweist, der größer als ein oberer Korrekturfaktorgrenzwert OG ist. Wenn dies der Fall ist, wird der Wert des aktuellen Korrekturfaktors K auf den Wert des oberen Korrekturfaktorgrenzwerts OG gesetzt. Somit wird verhindert, dass der Korrekturfaktor K unzulässig hohe Werte annehmen kann.

Im weiteren Schritt wird überprüft, ob der Wert des Korrekturfaktors K kleiner als ein unterer Grenzwert UG ist.

Wenn der Wert des Korrekturfaktors K unterhalb des unteren Grenzwertes UG liegt, kann der Korrekturfaktor K nicht weiter reduziert werden. Der untere Grenzwert UG definiert eine minimale elektrische Ausgangsspannung, mit der ein zuverlässiger Betrieb möglich ist. In diesem Fall, d.h. wenn der Wert des Korrekturfaktors K unterhalb des unteren Grenzwertes UG liegt, wird der Wert für den Korrekturfaktor K auf den unteren Grenzwert UG gesetzt.

In einem weiteren Schritt wird der Wert des Korrekturfaktors K mit dem ersten unteren Schwellwert U3 verglichen. Ist der Wert der Eingangsspannung Uacc kleiner als der dritte untere Schwellwert U3, wird der Wert des Korrekturfaktors K um einen ersten, unteren Korrekturwert K3 erniedrigt.

Bei dem ersten unteren Korrekturwert K3 kann es sich um einen fixen, vorgegebenen Wert handeln, oder der erste untere Korrekturwert K3 wird wie der erste obere Korrekturwert K1 bestimmt. Zum Beispiel kann hierzu die Differenz aus der Eingangsspannung Uacc und dem ersten unteren Schwellwertes U3 gebildet werden, um bei einer großen Differenz einen überproportional großen Korrekturwert K zu bilden und bei einer kleinen Differenz einen unterproportional großen Korrekturwert K zu bilden. Eine große Differenz liegt vor, wenn der Wert der Differenz zwischen der Eingangsspannung Uacc und dem ersten unteren Schwellwert U3 oberhalb eines Grenzwerts liegt. Eine kleine Differenz liegt vor, wenn der Wert der Differenz zwischen der Eingangsspannung Uacc und dem ersten unteren Schwellwert U3 unterhalb des Grenzwerts liegt.

In einem weiteren Schritt wird der Wert des Korrekturfaktors K mit dem zweiten unteren Schwellwert U4 verglichen. Wenn der Wert des Korrekturfaktors K unterhalb des zweiten unteren Schwellwerts U4 liegt, wird der Wert des Korrekturfaktors K um einen zweiten unteren Korrekturwert K4 erniedrigt.

Bei dem zweiten unteren Korrekturwert K4 kann es sich um einen fixen, vorgegebenen Wert handeln, oder der zweite untere Korrekturwert K4 wird wie der erste Korrekturwert K1 bestimmt. Zum Beispiel kann hierzu die Differenz aus der Eingangsspannung Uacc und dem zweiten unteren Schwellwertes U4 gebildet werden, um bei einer großen Differenz einen überproportional großen Korrekturwert K zu bilden und bei einer kleinen Differenz einen unterproportional großen Korrekturwert K zu bilden. Eine große Differenz liegt vor, wenn der Wert der Differenz zwischen der Eingangsspannung Uacc und dem zweiten unteren Schwellwert U4 oberhalb eines Grenzwerts liegt. Eine kleine Differenz liegt vor, wenn der Wert der Differenz zwischen der Eingangsspannung Uacc und dem zweiten unteren Schwellwert U4 unterhalb des Grenzwerts liegt.

In einem weiteren Schritt wird überprüft, ob der nun erhaltene Korrekturfaktor K aufgrund der Reduzierung um den ersten unteren Korrekturwert K3 und/oder zweiten unteren vierten Korrekturwert K4 einen Wert aufweist, der kleiner als ein unterer Korrekturfaktorgrenzwert UK ist. Wenn dies der Fall ist, wird der Wert des aktuellen Korrekturfaktors K auf den Wert des unteren Korrekturfaktorgrenzwerts UK gesetzt. Somit wird verhindert, dass der Korrekturfaktor K unzulässig kleine Werte annehmen kann.

In einem weiteren Schritt ist vorgesehen, dass der Korrekturfaktor mit einem Abschaltgrenzwert AG verglichen wird, und wenn der Vergleich ergibt, dass der Wert des Korrekturfaktors K kleiner als der Abschaltgrenzwert AG ist, wird ein Abschaltvorgang ausgelöst. Das Auslösen kann das Erzeugen und Versenden eines Abschaltsignals umfassen, mit dem ein Stromregler oder die Schaltungsanordnung 100 als Ganzes oder teilweise abgeschaltet werden können.

### BEZUGSZEICHENLISTE

- 100: Schaltungsanordnung
- 102: erster Anschluss
- 104: zweiter Anschluss
- 106: Vergleichseinrichtung
- 108: Energiespeicher
- 110: Kondensator
- 112a: Erhöhungseinrichtung
- 112b: Erhöhungseinrichtung
- 112c: Erhöhungseinrichtung
- 114a: Reduziereinrichtung
- 114b: Reduziereinrichtung
- 114c: Reduziereinrichtung

- 200: Teilschaltungsanordnung
- 202: Verstärker
- 204: erster Schalter
- 206: Schließer
- 208: zweiter Schalter
- 210: Öffner
- 212: Vergleichseinrichtung
- 214: Vergleichseinrichtung
- 216: Vergleichseinrichtung
- 218: Vergleichseinrichtung
- 220: ohmscher Widerstand
- 222: ohmscher Widerstand
- 224: ohmscher Widerstand
- 226: ohmscher Widerstand
- 228: Diode
- 230: Diode
- 232: Diode
- 234: Masse
- 236: Komparator
- 238: Komparator
- 240: Komparator
- 242: Komparator

- AG: Abschaltgrenzwert
- K: Korrekturfaktor
- K1: erster oberer Korrekturwert
- K2: zweiter oberer Korrekturwert
- K3: erster unterer Korrekturwert
- K4: zweiter unterer Korrekturwert
- OG: oberer Grenzwert
- OK: oberer Korrekturfaktorgrenzwert
- S: Startsignal
- U1: erster oberer Schwellwert
- U2: zweiter oberer Schwellwert
- U3: erster unterer Schwellwert
- U4: zweiter unterer Schwellwert
- Uacc: Eingangsspannung
- UG: unterer Grenzwert
- UH: maximaler Ausgangsspannung-Grenzwert
- UK: unterer Korrekturfaktorgrenzwert
- UL: minimaler Ausgangsspannungs-Grenzwert
- Um: m-ter oberer Schwellwert
- Un: n-ter unterer Schwellwert
- Uo: Ausgangsspannung

## Patentansprüche

1. Schaltungsanordnung (100) zur Bestimmung eines Sollwerts einer Strombegrenzung eines Stromreglers, mit:
- einem Energiespeicher (108), der eine Ausgangsspannung (Uo) ausgibt;
- einer Vergleichseinrichtung (106) zum Vergleichen eines Wertes einer elektrischen Eingangsspannung (Uacc) mit einem ersten oberen Schwellwert (U1), mit einem zweiten oberen Schwellwert (U2), mit einem ersten unteren Schwellwert (U3) und mit einem zweiten unteren Schwellwert (U4);
- einer ersten Erhöhungseinrichtung (112a);
- einer zweiten Erhöhungseinrichtung (112b);
- einer ersten Reduziereinrichtung (114a);
- einer zweiten Reduziereinrichtung (114b);
- wobei, wenn die Eingangsspannung (Uacc) größer als der erste obere Schwellwert (U1) ist, wird der Sollwert erhöht und die erste Erhöhungseinrichtung (112a) eingeschaltet, und damit die Ausgangsspannung um einen ersten Wert erhöht;
- wobei, wenn die Eingangsspannung (Uacc) größer als der zweite obere Schwellwert (U2) ist, wird der Sollwert erhöht und die zweite Erhöhungseinrichtung (112b) eingeschaltet, und damit die Ausgangsspannung um einen zweiten Wert erhöht;
- wobei, wenn die Eingangsspannung (Uacc) kleiner als der erste untere Schwellwert (U3) ist, wird der Sollwert reduziert und die erste Reduziereinrichtung (114a) eingeschaltet, und damit die Ausgangsspannung um einen dritten Wert reduziert;
- wobei, wenn die Eingangsspannung (Uacc) kleiner als der zweite untere Schwellwert (U4) ist, wird der Sollwert reduziert und die zweite Reduziereinrichtung (114b) eingeschaltet, und damit die Ausgangsspannung um einen vierten Wert reduziert;
- wobei dem ersten oberen Schwellwert (U1) eine erste Zeitkonstante zugeordnet ist, und dem zweiten oberen Schwellwert (U2) eine zweite Zeitkonstante zugeordnet ist, wobei die erste Zeitkonstante größer als die zweite Zeitkonstante ist, so dass bei Überschreiten des zweiten oberen Schwellwertes (U2) der Sollwert der Strombegrenzung schneller geändert wird als bei Überschreiten des ersten oberen Schwellwertes (U1);
- wobei dem ersten unteren Schwellwert (U3) eine dritte Zeitkonstante zugeordnet ist, und dem zweiten unteren Schwellwert (U4) eine vierte Zeitkonstante zugeordnet ist, wobei die dritte Zeitkonstante größer als die vierte Zeitkonstante ist, so dass bei Überschreiten des zweiten unteren Schwellwertes (U4) der Sollwert der Strombegrenzung schneller geändert wird als bei Überschreiten des ersten unteren Schwellwertes (U3).

2. Schaltungsanordnung (100) nach Anspruch 1, wobei die Schaltungsanordnung (100) ausgebildet ist, den Wert der elektrischen Ausgangsspannung (Uo) mit einem maximalen Ausgangsspannung-Grenzwert (UH) zu vergleichen, und wenn der Vergleich ergibt, dass der Wert der elektrische Ausgangsspannung (Uo) größer als der maximale Ausgangsspannung-Grenzwert (UH) ist, den Wert für die Ausgangsspannung (Uo) auf den Wert des maximale Ausgangsspannung-Grenzwerts (UH) zu setzen oder die Schaltungsanordnung (100) abzuschalten.

3. Schaltungsanordnung (100) nach einem der vorstehenden Ansprüche, wobei die Schaltungsanordnung (100) eine Mehrzahl von Erhöhungseinrichtungen (112a, 112b, ..., 112n) aufweist, wobei jeder der Erhöhungseinrichtungen (112a, 112b, ..., 112n) jeweils ein oberer Schwellwert (U1, U2, ..., Un) zugeordnet ist.

4. Schaltungsanordnung (100) nach einem der vorstehenden Ansprüche, wobei die Schaltungsanordnung (100) eine Mehrzahl von Reduziereinrichtungen (114a, 114b, ..., 114n) aufweist, wobei jeder der Reduziereinrichtungen (114a, 114b, ..., 114n) jeweils ein unterer Schwellwert (U3, U4, ..., Um) zugeordnet ist.

5. Schaltungsanordnung (100) nach einem der vorstehenden Ansprüche, wobei die Schaltungsanordnung (100) ausgebildet ist, den Wert der elektrischen Ausgangsspannung (Uo) mit einem minimalen Ausgangsspannungs-Grenzwert (UL) zu vergleichen, und wenn der Vergleich ergibt, dass der Wert der elektrischen Ausgangsspannung (Uo) kleiner als der minimale Ausgangsspannungs-Grenzwert (UH) ist, den Wert für die Ausgangsspannung (Uo) auf den minimalen Ausgangsspannungs-Grenzwert (UH) zu setzen, oder die Schaltungsanordnung (100) abzuschalten.

6. Schaltungsanordnung (100) nach einem der vorstehenden Ansprüche, wobei die Schaltungsanordnung (100) einen Spannungsteiler zum Bereitstellen eines oberen Schwellwerts (U1, U2, ..., Un) und/oder eines unteren Schwellwerts (U3, U4, ..., Um) aufweist.

7. Schaltungsanordnung (100) nach einem der vorstehenden Ansprüche, wobei die Vergleichseinrichtung (106) einen Komparator (236 - 242) aufweist.

8. Verfahren zur Bestimmung eines Korrekturfaktors (K) zur Bestimmung eines Sollwerts einer Strombegrenzung eines Stromreglers, mit:
- Vergleichen eines Wertes einer elektrischen Eingangsspannung (Uacc) mit einem ersten oberen Schwellwert (U1),
- Erhöhen eines Wertes des Korrekturfaktors (K) um einen ersten oberen Korrekturwert (K1), wenn der Vergleich ergibt, dass der Wert der Eingangsspannung (Uacc) größer als der erste obere Schwellwert (U1) ist,
- Vergleichen eines Wertes einer elektrischen Eingangsspannung (Uacc) mit einem zweiten oberen Schwellwert (U2),
- Erhöhen eines Wertes des Korrekturfaktors (K) um einen zweiten oberen Korrekturwert (K2), wenn der Vergleich ergibt, dass der Wert der Eingangsspannung (Uacc) größer als der zweite obere Schwellwert (U2) ist,
- Vergleichen des Wertes der einer elektrischen Eingangsspannung (Uacc) mit einem ersten unteren Schwellwert (U3),
- Erniedrigen eines Wertes des Korrekturfaktors (K) um einen ersten unteren Korrekturwert (K3), wenn der Vergleich ergibt, dass der Wert der Eingangsspannung (Uacc) kleiner als der erste untere Schwellwert (U3) ist,
- Vergleichen eines Wertes einer elektrischen Eingangsspannung (Uacc) mit einem zweiten unteren Schwellwert (U4),
- Erniedrigen eines Wertes des Korrekturfaktors (K) um einen zweiten unteren Korrekturwert (K4), wenn der Vergleich ergibt, dass der Wert der Eingangsspannung (Uacc) kleiner als der zweite untere Schwellwert (U4) ist.

9. Verfahren nach Anspruch 8, wobei der Wert des Korrekturfaktors (K) mit einem oberen Grenzwert (OG) verglichen wird, und der Wert des Korrekturfaktors (K) auf den Wert des oberen Grenzwerts (OG) gesetzt wird, wenn der Wert des Korrekturfaktors (K) größer als der obere Grenzwert (OG) ist.

10. Verfahren nach einem der vorstehenden Ansprüche 8 oder 9, wobei der Wert des Korrekturfaktors (K) mit einem oberen Korrekturfaktorgrenzwert (OK) verglichen wird, und wenn der Vergleich ergibt, dass der Wert des Korrekturfaktors (K) größer als der obere Korrekturfaktorgrenzwert (OK) ist, der Wert für den Korrekturfaktor (K) auf den oberen Korrekturfaktorgrenzwert (OK) gesetzt wird.

11. Verfahren nach einem der vorstehenden Ansprüche 8 bis 10, wobei der Wert des Korrekturfaktors (K) mit einem unteren Grenzwert (UG) verglichen wird, und der Wert des Korrekturfaktors (K) auf den Wert des unteren Grenzwertes gesetzt wird, wenn der Wert des Korrekturfaktors (K) kleiner als der untere Grenzwert (UG) ist.

12. Verfahren nach einem der vorstehenden Ansprüche 8 bis 11, wobei der Wert des Korrekturfaktors (K) mit einem unteren Korrekturfaktorgrenzwert (UK) verglichen wird, und wenn der Vergleich ergibt, dass der Wert des Korrekturfaktors (K) kleiner als der untere Korrekturfaktorgrenzwert (UK) ist, der Wert für den Korrekturfaktor (K) auf den unteren Korrekturfaktorgrenzwert (UK) gesetzt wird.

13. Verfahren nach einem der vorstehenden Ansprüche 8 bis 12, wobei der Wert des Korrekturfaktors (K) mit einem Abschaltgrenzwert (AG) verglichen wird, und wenn der Vergleich ergibt, dass der Wert des Korrekturfaktors (K) kleiner als der Abschaltgrenzwert (AG) ist, ein Abschaltvorgang ausgelöst wird.

14. Computerprogramm mit einem Programmcode zum Ausführen des Verfahrens nach einem der Ansprüche 8 bis 13, wenn der Programmcode auf einem Computer ausgeführt wird.

## Claims

1. A circuit arrangement (100) for determining a target value of a current limit of a current regulator, the circuit arrangement (100) comprising:
- an energy storage (108), which outputs an output voltage (Uo);
- a comparator device (106) for comparing a value of an electrical input voltage (Uacc) with a first upper threshold value (U1), with a second upper threshold value (U2), with a first lower threshold value (U3) and with a second lower threshold value (U4);
- a first increasing device (112a);
- a second increasing device (112b);
- a first reducing device (114a);
- a second reducing device (114b);
- wherein, if the input voltage (Uacc) is greater than the first upper threshold value (U1), the target value is increased and the first increasing device (112a) is switched on, thus increasing the output voltage by a first value;
- wherein, if the input voltage (Uacc) is greater than the second upper threshold value (U2), the target value is increased and the second increasing device (112b) is switched on, thus increasing the output voltage by a second value;
- wherein, if the input voltage (Uacc) is smaller than the first lower threshold value (U3), the target value is reduced and the first reducing device (114a) is switched on, thus reducing the output voltage by a third value;
- wherein, if the input voltage (Uacc) is smaller than the second lower threshold value (U4), the target value is reduced and the second reducing device (114b) is switched on, thus reducing the output voltage by a fourth value;
- wherein a first time constant is assigned to the first upper threshold value (U1), and a second time constant is assigned to the second upper threshold value (U2), wherein the first time constant is greater than the second time constant, so that when the second upper threshold value (U2) is exceeded, the target value of the current limit is changed more quickly than when the first upper threshold value (U1) is exceeded;
- wherein a third time constant is assigned to the first lower threshold value (U3), and a fourth time constant is assigned to the second lower threshold value (U4), wherein the third time constant is greater than the fourth time constant, so that when the second lower threshold value (U4) is exceeded, the target value of the current limitation is changed more quickly than when the first lower threshold value (U3) is exceeded.

2. The circuit arrangement (100) according to claim 1, wherein the circuit arrangement (100) is configured to compare the value of the electrical output voltage (Uo) with a maximum output voltage limit value (UH), and if the comparison indicates that the value of the electrical output voltage (Uo) is greater than the maximum output voltage limit value (UH), to set the value for the output voltage (Uo) to the value of the maximum output voltage limit value (UH) or to switch off the circuit arrangement (100).

3. The circuit arrangement (100) according to one of the preceding claims, wherein the circuit arrangement (100) comprises a plurality of increasing devices (112a, 112b, ..., 112n), wherein each of the increasing devices (112a, 112b, ..., 112n) is assigned a respective upper threshold value (U1, U2, ..., Un).

4. The circuit arrangement (100) according to one of the preceding claims, wherein the circuit arrangement (100) comprises a plurality of reducing devices (114a, 114b, ..., 114n), wherein each of the reducing devices (114a, 114b, ..., 114n) is assigned a respective lower threshold value (U3, U4, ..., Um).

5. The circuit arrangement (100) according to one of the preceding claims, wherein the circuit arrangement (100) is configured to compare the value of the electrical output voltage (Uo) with a minimum output voltage limit value (UL), and if the comparison indicates that the value of the electrical output voltage (Uo) is smaller than the minimum output voltage limit value (UH), to set the value for the output voltage (Uo) to the minimum output voltage limit value (UH), or to switch off the circuit arrangement (100).

6. The circuit arrangement (100) according to one of the preceding claims, wherein the circuit arrangement (100) comprises a voltage divider for providing an upper threshold value (U1, U2, ..., Un) and/or a lower threshold value (U3, U4, ..., Um).

7. The circuit arrangement (100) according to one of the preceding claims, wherein the comparator device (106) comprises a comparator (236 - 242).

8. A Method for determining a correction factor (K) for determining a target value of a current limit of a current controller, the method comprising:
- comparing a value of an electrical input voltage (Uacc) with a first upper threshold value (U1),
- increasing a value of the correction factor (K) by a first upper correction value (K1) if the comparison indicates that the value of the input voltage (Uacc) is greater than the first upper threshold value (U1),
- comparing a value of an electrical input voltage (Uacc) with a second upper threshold value (U2),
- increasing a value of the correction factor (K) by a second upper correction value (K2) if the comparison indicates that the value of the input voltage (Uacc) is greater than the second upper threshold value (U2),
- comparing the value of the electrical input voltage (Uacc) with a first lower threshold value (U3),
- reducing a value of the correction factor (K) by a first lower correction value (K3) if the comparison indicates that the value of the input voltage (Uacc) is smaller than the first lower threshold value (U3),
- comparing a value of an electrical input voltage (Uacc) with a second lower threshold value (U4),
- reducing a value of the correction factor (K) by a second lower correction value (K4) if the comparison indicates that the value of the input voltage (Uacc) is smaller than the second lower threshold value (U4).

9. The method according to claim 8, wherein the value of the correction factor (K) is compared with an upper limit value (OG), and the value of the correction factor (K) is set to the value of the upper limit value (OG) if the value of the correction factor (K) is greater than the upper limit value (OG).

10. The method according to one of the preceding claims 8 or 9, wherein the value of the correction factor (K) is compared with an upper correction factor limit value (OK), and if the comparison indicates that the value of the correction factor (K) is greater than the upper correction factor limit value (OK), the value for the correction factor (K) is set to the upper correction factor limit value (OK).

11. The method according to one of the preceding claims 8 to 10, wherein the value of the correction factor (K) is compared with a lower limit value (UG), and the value of the correction factor (K) is set to the value of the lower limit value if the value of the correction factor (K) is smaller than the lower limit value (UG).

12. The method according to one of the preceding claims 8 to 11, wherein the value of the correction factor (K) is compared with a lower correction factor limit value (UK), and if the comparison indicates that the value of the correction factor (K) is smaller than the lower correction factor limit value (UK), the value for the correction factor (K) is set to the lower correction factor limit value (UK).

13. The method according to one of the preceding claims 8 to 12, wherein the value of the correction factor (K) is compared with a switch-off limit value (AG), and if the comparison indicates that the value of the correction factor (K) is smaller than the switch-off limit value (AG), a switch-off process is triggered.

14. A computer program comprising a program code for executing the method according to any one of claims 8 to 13 when the program code is executed on a computer.

## Revendications

1. Agencement de circuit (100) permettant de déterminer une valeur cible d'une limite de courant d'un régulateur de courant, ledit agencement de circuit (100) comprenant :
- un stockage d'énergie (108), qui délivre une tension de sortie (Uo) ;
- un dispositif comparateur (106) pour comparer une valeur d'une tension électrique d'entrée (Uacc) à une première valeur de seuil supérieure (U1), à une deuxième valeur de seuil supérieure (U2), à une première valeur de seuil inférieure (U3) et à une deuxième valeur de seuil inférieure (U4) ;
- un premier dispositif de levage (112a) ;
- un deuxième dispositif de levage (112b) ;
- un premier dispositif réducteur (114a) ;
- un deuxième dispositif réducteur (114b) ;
- dans lequel, si la tension d'entrée (Uacc) est supérieure à la première valeur de seuil supérieure (U1), la valeur cible est augmentée et le premier dispositif d'augmentation (112a) est activé, augmentant ainsi la tension de sortie d'une première valeur ;
- dans lequel, si la tension d'entrée (Uacc) est supérieure à la deuxième valeur de seuil supérieure (U2), la valeur cible est augmentée et le deuxième dispositif d'augmentation (112b) est activé, augmentant ainsi la tension de sortie d'une deuxième valeur ;
- dans lequel, si la tension d'entrée (Uacc) est inférieure à la première valeur de seuil inférieure (U3), la valeur cible est réduite et le premier dispositif de réduction (114a) est activé, réduisant ainsi la tension de sortie d'une troisième valeur ;
- dans lequel, si la tension d'entrée (Uacc) est inférieure à la deuxième valeur de seuil inférieure (U4), la valeur cible est réduite et le deuxième dispositif de réduction (114b) est activé, réduisant ainsi la tension de sortie d'une quatrième valeur ;
- dans laquelle une première constante de temps est attribuée à la première valeur de seuil supérieure (U1), et une seconde constante de temps est attribuée à la seconde valeur de seuil supérieure (U2), la première constante de temps étant supérieure à la seconde constante de temps, de sorte que lorsque la seconde valeur de seuil supérieure (U2) est dépassée, la valeur cible de la limite de courant est modifiée plus rapidement que lorsque la première valeur de seuil supérieure (U1) est dépassée ;
- dans laquelle une troisième constante de temps est attribuée à la première valeur de seuil inférieure (U3), et une quatrième constante de temps est attribuée à la deuxième valeur de seuil inférieure (U4), la troisième constante de temps étant supérieure à la quatrième constante de temps, de sorte que lorsque la deuxième valeur de seuil inférieure (U4) est dépassée, la valeur cible de la limitation de courant est modifiée plus rapidement que lorsque la première valeur de seuil inférieure (U3) est dépassée.

2. Agencement de circuit (100) selon la revendication 1, dans lequel l'agencement de circuit (100) est configuré pour comparer la valeur de la tension de sortie électrique (Uo) à une valeur limite de tension de sortie maximale (UH), et si la comparaison indique que la valeur de la tension de sortie électrique (Uo) est supérieure à la valeur limite de tension de sortie maximale (UH), pour régler la valeur de la tension de sortie (Uo) à la valeur de la valeur limite de tension de sortie maximale (UH) ou pour mettre hors tension l'agencement de circuit (100).

3. Agencement de circuit (100) selon l'une des revendications précédentes, dans lequel l'agencement de circuit (100) comprend une pluralité de dispositifs d'augmentation (112a, 112b, ..., 112n), chacun des dispositifs d'augmentation (112a, 112b, ..., 112n) étant associé à une valeur de seuil supérieure respective (U1, U2, ..., Un).

4. Agencement de circuit (100) selon l'une des revendications précédentes, dans lequel l'agencement de circuit (100) comprend une pluralité de dispositifs de réduction (114a, 114b, ..., 114n), chacun des dispositifs de réduction (114a, 114b, ..., 114n) étant associé à une valeur de seuil inférieure respective (U3, U4, ..., Um).

5. Agencement de circuit (100) selon l'une des revendications précédentes, dans lequel l'agencement de circuit (100) est configuré pour comparer la valeur de la tension de sortie électrique (Uo) à une valeur limite de tension de sortie minimale (UL), et si la comparaison indique que la valeur de la tension de sortie électrique (Uo) est inférieure à la valeur limite de tension de sortie minimale (UH), pour régler la valeur de la tension de sortie (Uo) à la valeur limite de tension de sortie minimale (UH), ou pour mettre hors tension l'agencement de circuit (100).

6. Agencement de circuit (100) selon l'une des revendications précédentes, dans lequel l'agencement de circuit (100) comprend un diviseur de tension pour fournir une valeur de seuil supérieure (U1, U2, ..., Un) et/ou une valeur de seuil inférieure (U3, U4, ..., Um).

7. Agencement de circuit (100) selon l'une des revendications précédentes, dans lequel le dispositif comparateur (106) comprend un comparateur (236 - 242).

8. Procédé de détermination d'un facteur de correction (K) pour déterminer une valeur cible d'une limite de courant d'un contrôleur de courant, comprenant :
- comparer une valeur d'une tension électrique d'entrée (Uacc) à une première valeur seuil supérieure (U1),
- augmenter une valeur du facteur de correction (K) d'une première valeur de correction supérieure (K1) si la comparaison indique que la valeur de la tension d'entrée (Uacc) est supérieure à la première valeur seuil supérieure (U1),
- comparer une valeur d'une tension électrique d'entrée (Uacc) à une seconde valeur seuil supérieure (U2),
- augmenter une valeur du facteur de correction (K) d'une deuxième valeur de correction supérieure (K2) si la comparaison indique que la valeur de la tension d'entrée (Uacc) est supérieure à la deuxième valeur seuil supérieure (U2),
- comparer la valeur de la tension électrique d'entrée (Uacc) à une première valeur seuil inférieure (U3),
- réduire une valeur du facteur de correction (K) d'une première valeur de correction inférieure (K3) si la comparaison indique que la valeur de la tension d'entrée (Uacc) est inférieure à la première valeur seuil inférieure (U3),
- comparer une valeur d'une tension électrique d'entrée (Uacc) à une seconde valeur seuil inférieure (U4),
- réduire une valeur du facteur de correction (K) d'une seconde valeur de correction inférieure (K4) si la comparaison indique que la valeur de la tension d'entrée (Uacc) est inférieure à la seconde valeur seuil inférieure (U4).

9. Procédé selon la revendication 8, dans lequel la valeur du facteur de correction (K) est comparée à une valeur limite supérieure (OG), et la valeur du facteur de correction (K) est fixée à la valeur de la valeur limite supérieure (OG) si la valeur du facteur de correction (K) est supérieure à la valeur limite supérieure (OG).

10. Procédé selon l'une des revendications 8 ou 9 précédentes, dans lequel la valeur du facteur de correction (K) est comparée à une valeur limite supérieure du facteur de correction (OK), et si la comparaison indique que la valeur du facteur de correction (K) est supérieure à la valeur limite supérieure du facteur de correction (OK), la valeur du facteur de correction (K) est fixée à la valeur limite supérieure du facteur de correction (OK).

11. Procédé selon l'une des revendications 8 à 10 précédentes, dans lequel la valeur du facteur de correction (K) est comparée à une valeur limite inférieure (UG), et la valeur du facteur de correction (K) est fixée à la valeur de la valeur limite inférieure si la valeur du facteur de correction (K) est inférieure à la valeur limite inférieure (UG).

12. Procédé selon l'une des revendications 8 à 11 précédentes, dans lequel la valeur du facteur de correction (K) est comparée à une valeur limite inférieure du facteur de correction (UK), et si la comparaison indique que la valeur du facteur de correction (K) est inférieure à la valeur limite inférieure du facteur de correction (UK), la valeur du facteur de correction (K) est fixée à la valeur limite inférieure du facteur de correction (UK).

13. Procédé selon l'une des revendications 8 à 12 précédentes, dans lequel la valeur du facteur de correction (K) est comparée à une valeur limite de coupure (AG), et si la comparaison indique que la valeur du facteur de correction (K) est inférieure à la valeur limite de coupure (AG), un processus de coupure est déclenché.

14. Programme informatique comprenant un code de programme pour exécuter le procédé selon l'une quelconque des revendications 8 à 13 lorsque le code de programme est exécuté sur un ordinateur.
